# EUROPEAN PATENT SPECIFICATION

(11) **EP 0 704 837 B1**
(45) Date of publication and mention of the grant of the patent: **07.10.1998**
(21) Application number: 95113531.8
(22) Date of filing: 29.08.1995
(51) Int. Cl.: G11B 5/00, G11B 21/00, G11B 21/21, G11B 21/20, G11B 5/60, G11B 5/48

(54) **Hard disk head control**
Festplattenkopfsteuerung
Commande d'une tête de disque rigide

(30) Priority: 01.09.1994 KR 9422006
(43) Date of publication of application: 03.04.1996
(73) Proprietor: Samsung Electronics Co., Ltd., Suwon-city, Kyungki-do 441-370 (KR)
(72) Inventor: Lee, Hae-Jung Shinmaetan Apt n 18-310, Suwon-City Kyungki-Do (KR)
(74) Representative: Tunstall, Christopher Stephen

(56) References cited:
- EP-A- 0 451 959
- EP-A- 0 605 343
- EP-A- 0 665 548
- US-A- 4 843 502
- US-A- 5 307 224
- PATENT ABSTRACTS OF JAPAN vol. 012 no. 468 (P-797) ,8 December 1988 & JP-A-63 187477 (TOSHIBA CORP;OTHERS: 01) 3 August 1988,

## Description

The present invention relates to the control of a head suspension in a hard disk drive (referred to as "HDD" hereinafter).

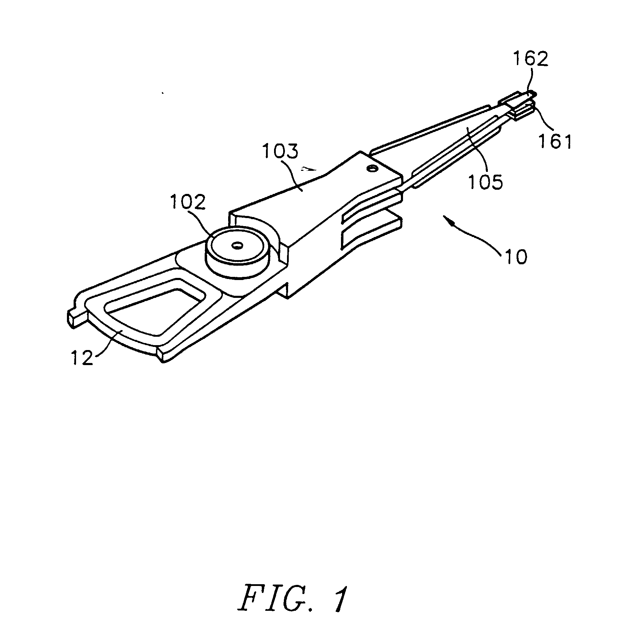

Recently, the trend in HDD technology is towards high capacity. Therefore, the head of the HDD should have a constantly low flying height. The flying height is about 3.0-20µ. In order to achieve such a flying height, balance weighted head suspensions and the flying force of an ABS (Air Bearing Surface) of a slider are used. Using the ABS, the head of the HDD is maintained at the low flying height when the spindle motor rotates at constant speed. However, the ABS of the head is contacted with the disk during the start/stop of the spindle motor. Friction between the ABS of the head and the disk generates dust which affects the HDD. Further, due to the dust, the life and reliability of the HDD are reduced. Such problems will be explained in detail with respect to Figs. 1 to 3.

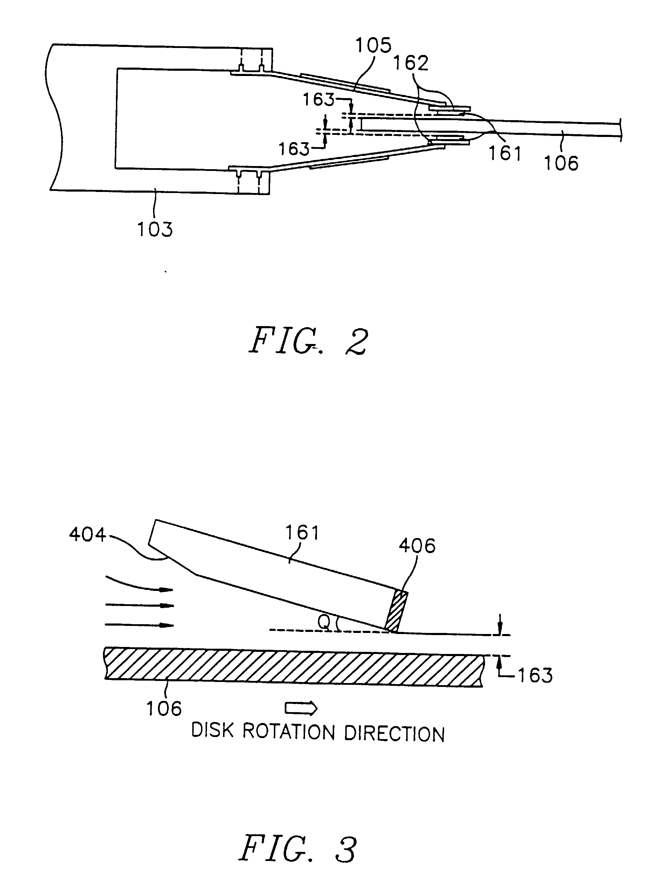

In the HDD, as shown in Fig. 2, the control on the flying height, being the interval between the magnetic head 161 and the disk 106, is disclosed in US Patent No. 5,012,369. Since the flying height is closely related to the high capacity and performance of the HDD, it is an important element in the HDD. The most probable operation in the magnetic write/read apparatus such as a HDD is performed such that the magnetic head 161 and the disk 106 contact each other at the same time. However, as HDDs should preferably last for a long time, there should not be any abrasion when the magnetic head 161 and the disk 106 contact each other. However, according to the above method, the dust is generated due to abrasion when the magnetic head 161 and the disk 106 contact each other. Therefore, there are problems with the above method.

To minimize abrasion caused by the above contact, one of the methods widely used in the prior art is to fly the magnetic head 161 on an air flow generated by rotation of the disk as shown in Fig. 3. According to this method, a balance weight of the suspension 105 related to the shape of the head slider and the suspension 105 is used. However, since the disk does not always rotate at constant speed, the linear velocity of the air flow in each position is different according to the radius of the HDD. Thus, as the head 161 becomes close to the circumference of the disk, the flying height becomes too high. To solve this problem, the performance, capacity and endurance of the HDD have been increased by providing a skew angle between the direction of rotation of the disk 106 and the axial direction of the magnetic head 161.

However, when the magnetic head 161 is flown by fluid mechanical force from the turning effect of the disk, the disk 106 can contact the magnetic head 161 during the start or stop operation. That is, when starting the disk 106, by the time the rotation of the disk 106 arrives at a constant speed and the head 161 has thus "taken-off", the head 161 contacts the disk 106 to cause the head suspension to slide on the surface of the disk. Similarly when stopping in the stop of the disk 106, the disk is decelerated from the constant rotation speed, thus causing friction between the head and the disk, by the time the disk has completely stopped from the time the head 161 "lands".

In general to reduce the damage caused by friction, a parking area is set aside in which the head stops when the head 161 takes off from or lands on the surface of the disk 106. However, friction in the take-off/landing of the head still has a detrimental effect on the endurance of the HDD. Furthermore, because of the contact friction during the start/stop operations of the disk, additional problems arise. First, it is very difficult to rotate the disk 106 due to adsorption phenomena between the head 161 and the disk 106. Secondly, impurities generated by abrasion tend to damage the disk 106 and the head 161. This result in a scraping sound during the start/stop operations of the disk 106.

US-A-4843502 which is reflected in the preamble of claim 1 describes a HDD in which the height of a head suspension is controlled by piezoelectric transducers, arranged to ensure that the magnetic head only approaches the disk surface once the disk has reached a speed sufficient to enable the head to "fly" above it. The piezoelectric transducers are controlled by the disk controller according to the state of the HDD.

EP-A-0665548 which is only relevant under Art.54(3) already describes in a method of controlling a head suspension of a hard disk drive feedback means for generating a feedback signal corresponding to the degree of expansion or contraction of the expansion/contraction means and applying the control signal in dependence upon the feedback signal to maintain the separation of the head from the disk at a predetermined distance. It also describes separating the head from the disk during the starting or stopping of the disk rotation; however, it does not describe employing said feedback arrangement for separating the head from the disk during these periods (cf. e.g. col.12 1.40-51 and col.13 1.9-18).

It is therefore an object of the present invention to provide a control method and apparatus of a head suspension which prevents the head and the disk from contacting each other before, during or after the start/stop operations of the disk.

Accordingly, the present invention provides a method of controlling a head suspension in a hard disk drive which includes expansion/contraction means for controlling the height of the head suspension by expanding or contracting in response to a control signal, the method comprising applying a control signal to the expansion/contraction means to separate the head from the disk when the speed of rotation of the disk is below the speed required to generate sufficient air-flow to fly the head above the surface of the disk, **characterized in that** the hard disk drive further comprises feedback means for generating a feedback signal corresponding to the degree of expansion or contraction of the expansion/contraction means and the method comprises applying the control signal in dependence upon the feedback signal to maintain the separation of the head from the disk at a predetermined distance.

The method may comprise the steps of:
separating the head from the disk by applying the said control signal when the disk is stationary;
interrupting the said control signal when the speed of rotation of the disk arrives at that required to fly the head above the surface of the disk; and
separating the head from the disk by applying the said control signal when said disk speed drops below the speed required to fly the head above the surface of the disk.

An initial step of parking the head in a parking area of the disk when the disk is stationary and a subsequent step of parking the head suspension by applying a stop signal to the actuator at or before the time the disk stops its rotation may be included.

The present invention also provides apparatus for controlling a head suspension in a hard disk drive having a controller, the apparatus comprising means for generating a state signal according to a current disk operation function controlled by the controller, expansion/contraction means for controlling the height of the head suspension by expanding or contracting in response to a control signal and means for applying a control signal to the expansion/contraction means to separate the head from the disk in response to the state signal, when the speed of rotation of the disk is below the speed required to generate sufficient air-flow to fly the head above the surface of the disk **characterized by** feedback means for generating a feedback signal corresponding to the degree of expansion or contraction of the expansion/contraction means and means for applying the control signal in dependence upon the feedback signal to maintain the separation of the head from the disk at a predetermined distance.

The apparatus may include amplifying means for amplifying the state signal, the expansion/contraction means being responsive to a signal which is generated in the said amplifying means.

The expansion/contraction means may comprise a piezoelectric material, preferably a piezoelectric ceramic.

Preferably, the apparatus further comprises feedback mans for generating a feedback signal corresponding to the degree of expansion or contraction of the expansion/contraction means. The feedback means may comprise a piezoelectric ceramic.

The present invention will now be described by way of example with reference to the accompanying drawings in which:
Fig. 1 illustrates a head suspension mechanism;
Figs. 2 and 3 illustrate a constant flying height in an non-contact state between a head coupled with the head suspension and a disk;
Fig. 4 illustrates a piezoelectric material for start/stop control;
Fig. 5 is a circuit diagram illustrating the start/stop control of the head suspension according to the present invention;
Fig. 6 illustrates the reverse direction effect (electric field 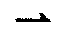 stress field) of the piezoelectric material;
Fig. 7 illustrates the forward direction effect (stress field 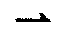 electric field) of the piezoelectric material;
Fig. 8 illustrates the attachment of the piezoelectric material to the suspension;
Fig. 9 illustrates the non-contact start/stop from the disk of the head suspension; and
Fig. 10 illustrates an actuator in which a swiss arm is attached to the piezoelectric material.

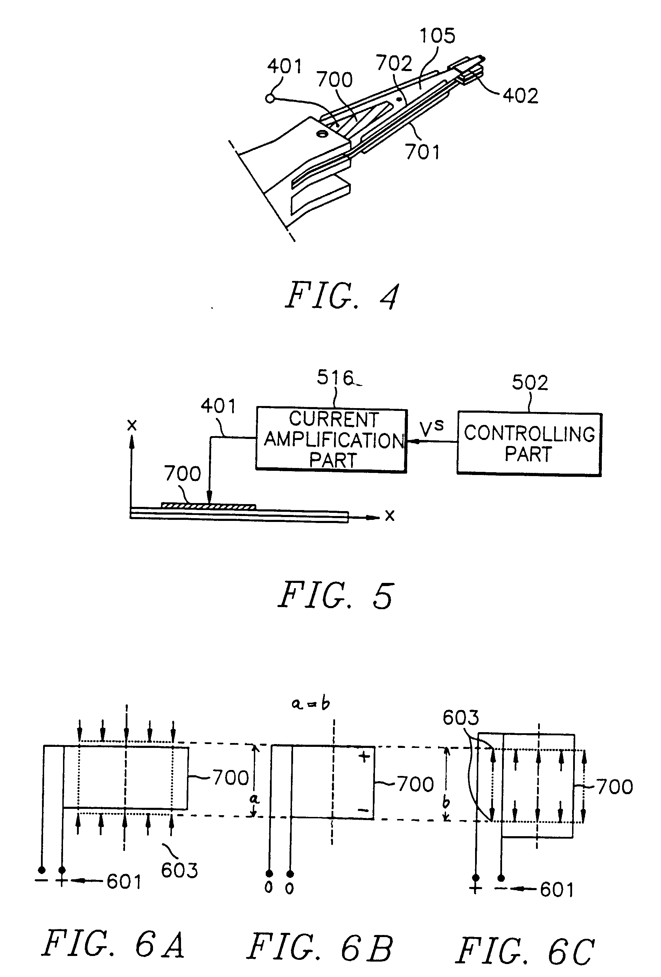

Fig. 4 shows one embodiment of the present invention. In the configuration of Fig. 4, a piezoelectric material 700 is attached to an upper of a head suspension 105, and a control signal, as shown in Fig. 5 is generated from a controller 502 according to the rotation state of the disk 106. The control signal is amplified in a current amplifier 516 and applied to the piezoelectric material 700 through wire 401. The piezoelectric material 700 receiving the control signal which is generated in the controller 502 and amplified in the current amplifier 516, generates force so that the suspension 105 can be bent or curved by compression and extension caused by the piezoelectric phenomenon effect.

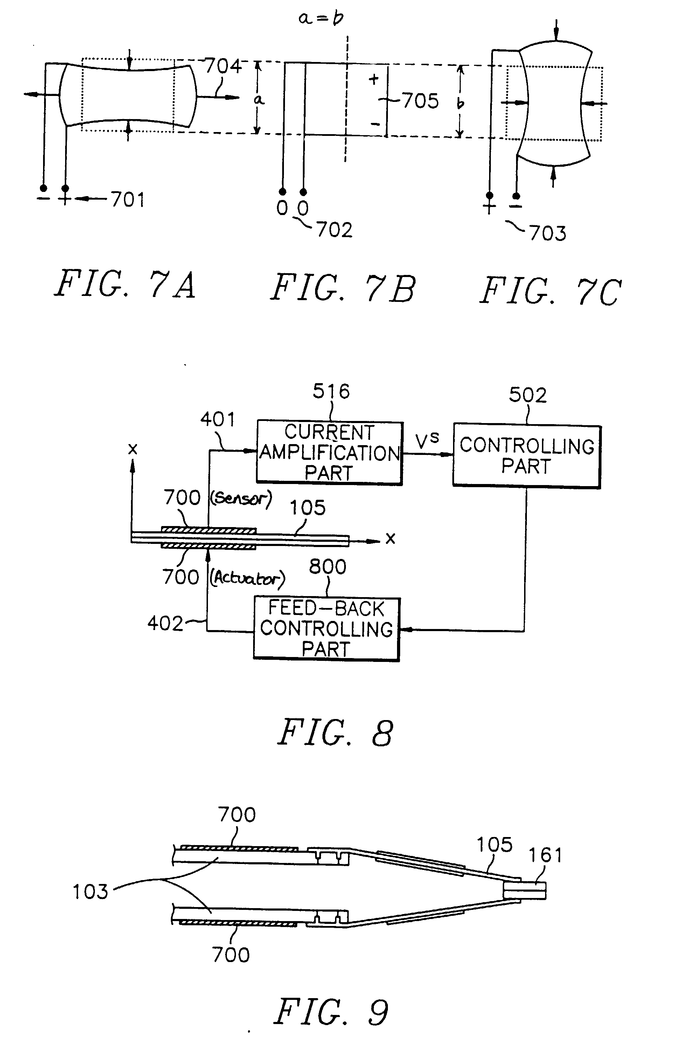

The piezoelectric material 700 is capable of bending or curving the suspension 105 according to the characteristics thereof (Figs. 6A, 6B, 6C, 7A, 7B, and 7C).

The force generated in the piezoelectric material 700 is transferred to the suspension 105 and enables the head 161 to separate from the disk 106 before/after the start and stop operations of the disk 106.

Thus, to obtain the force to be applied to the head suspension 105 in this embodiment of the present invention, the well known piezoelectric effect is utilised. The piezoelectric effect means that if pressure is exerted on any of the piezoelectric crystals, the material generates an electric field in proportion to the pressure. Conversely,if an electric field is applied to the crystals, the piezoelectric effect provides a change in the linear size caused by the electric field. Owing to this reversible connection relationship between mechanical energy and electric energy, piezoelectric materials are widely used in sound convertors, resonators, accelerometers, wave motion filters, photoelectric circuits, and photoelastic circuits etc.

As shown in Fig. 6A, when an electric field 601 is applied to the piezoelectric material 700, the piezoelectric material 700 is transformed by the resulting stress field 603. This is called the reverse direction effect of the piezoelectric material 700. As shown in Fig. 7A, when a force 704 is applied to the piezoelectric material 700 from outside, electric charge 705 is distributed as shown in Fig.7B and an electric field 703 is generated as shown in Fig. 7C. This is called the forward direction effect.

Fig. 8 illustrates another embodiment of the present invention, which shows a device for controlling the bend degree of the suspension 105 to which the piezoelectric material 700 is attached by expansion and extension of the piezoelectric element, the suspension 105 being a simple supporting element. In Fig. 8, if voltage is applied to one piezoelectric material 700 (an actuator) through a feed-back controller 800, an opposite piezoelectric material 700 used as a sensor is stretched or compressed to generate an electric field. The electric field is amplified in the current amplifier 516 and then input to the controller 502 through the wire 401. The controller 502 receives the output of the current amplifier 516 and manages the output according to the function of the HDD to apply the output to the feed-back controller 800. From this state, the controller 502 controls the degree of expansion/contraction the piezoelectric material 700 and thus controls the bend degree of the suspension 105.

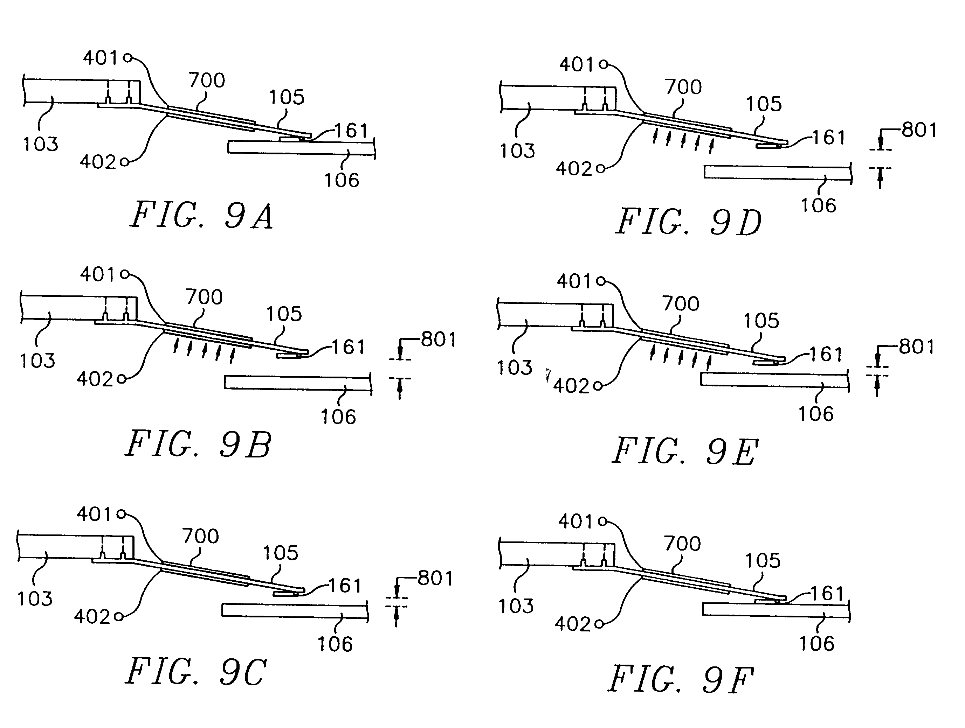

Figs. 9A to 9F help in explaining start/stop operations according to the present invention. The control through the embodiment according to the construction of Fig. 8 is illustrated.

Fig. 9A shows an initial state in which the disk 106 is stationary. In Fig. 9A, the piezoelectric material 700 is attached to the upper and lower portions of the suspension 105, and the head 161 is securely mounted in the parking area of the disk 106. The controller 502 recognizes that the disk 106 has stopped by the output of the current amplifier 516 or a function control state signal received through the wire 401. The control signal is thus not applied to the piezoelectric material 700 through the feed-back controller 800, so that the head, as shown in Fig. 9A, is securely mounted in the parking area of the disk.

Fig. 9B shows the state just before the starting up of the disk 106. At this moment, the controller 502 temporarily applies the electric field through the wire 402 from the feed-back controller 800 so that the piezoelectric material 700 is compressed. The suspension 105 is therefore bent to separate the head 161 from the surface of the disk 106. This state is sensed by the piezoelectric material 700 and then input to the controller 502 through the current amplifier 516. The controller 502 recognizes the input, and then starts and controls the disk. At this time, the flying height 801 or the time to reach flying height can be adjusted according to the characteristics of the controller 502 or the piezoelectric material 700.

In Fig. 9C, the controller 502 senses whether the rotation of the disk 106 reaches a constant speed or whether the disk 106 has sufficient speed to fly the head 161. In this state, the controller 502 applies the control signal to the piezoelectric material 700 through the feed-back controller 800 so that the head 161 is freely flown from the surface of the disk under control of the head 161.

Fig. 9D shows the state just before the stop operation of the disk 106. The controller 502 applies the control signal to the piezoelectric material 700 through the feed-back controller 800 when the disk 106 is at lower speed than the speed required for flying the head, unlike Fig. 9C, so that force is added to the suspension 105 to separate the head 161 from the surface of the disk 105.

Fig. 9E shows the state when the controller 502 applies the control signal to the piezoelectric material 700 by the time the disk 106 has completely stopped. Fig. 9F shows the state when the controller 502 frees the piezoelectric material 700 from the control signal after the disk has stopped, and the head 161 is securely mounted in the parking area of the disk 106.

In the control method mentioned above, it is difficult to generate the friction between the head 161 and the disk 106 since the controller 502 separates the head from the disk during the start and stop operations of the disk 106. The degree of any friction can be adjusted according to a required reduction of the "take-off" time or the delay of the "landing" time in a necessary case.

For a flexible swing arm, the piezoelectric material 700 is attached to the upper and lower ends of swiss arms 103 and can be used as shown in Fig. 10. Further, as shown in Fig. 8, the piezoelectric material are attached to the upper and lower ends of the swiss arms to be used as the feed-back controller 800.

The present invention is advantageous in that the effective balance weight of the head suspension can be adjusted according to the control of the piezoelectric materials attached when the flying height is changed. The flying height can be controlled according to the radial position of the head on the surface of the disk, through retrial after failure of the initial operation among all the operations of the hard disk drive. Thus, various methods for improving the function of the apparatus can be achieved.

## Claims

1. A method of controlling a head suspension in a hard disk drive which includes expansion/contraction means for controlling the height of the head suspension by expanding or contracting in response to a control signal, the method comprising applying a control signal to the expansion/contraction means to separate the head from the disk when the speed of rotation of the disk is below the speed required to generate sufficient air-flow to fly the head above the surface of the disk;
**characterized in that** the hard disk drive further comprises feedback means for generating a feedback signal corresponding to the degree of expansion or contraction of the expansion/contraction means; and
the method comprises applying the control signal in dependence upon the feedback signal to maintain the separation of the head from the disk at a predetermined distance.

2. A method according to claim 1 comprising the steps of:
separating the head from the disk by applying the said control signal when the disk is stationary;
interrupting the said control signal when the speed of rotation of the disk arrives at that required to fly the head above the surface of the disk; and
separating the head from the disk by applying the said control signal when said disk speed drops below the speed required to fly the head above the surface of the disk.

3. A method according to claim 2 and further comprising the initial step of parking the head in a parking area of the disk when the disk is stationary and the subsequent step of parking the head suspension by applying a stop signal to the actuator at or before the time the disk stops its rotation.

4. Apparatus for controlling a head suspension in a hard disk drive having a controller, the apparatus comprising:
means for generating a state signal according to a current disk operation function controlled by the controller;
expansion/contraction means for controlling the height of the head suspension by expanding or contracting in response to a control signal; and
means for applying a control signal to the expansion/contraction means to separate the head from the disk in response to the state signal when the speed of rotation of the disk is below the speed required to generate sufficient air-flow to fly the head above the surface of the disk;
**characterized by** feedback means for generating a feedback signal corresponding to the degree of expansion or contraction of the expansion/contraction means; and
means for applying the control signal in dependence upon the feedback signal to maintain the separation of the head from the disk at a predetermined distance.

5. Apparatus according to claim 4 including amplifying means for amplifying the state signal, the expansion/contraction means being responsive to a signal which is generated in the said amplifying means.

6. Apparatus according to claim 4 or claim 5, in which the expansion/ contraction means comprises a piezoelectric material.

7. Apparatus according to claim 6, in which the piezoelectric material comprises a piezoelectric ceramic.

8. Apparatus according to any one of claims 4-7 in which the means for generating a feedback signal comprises a piezoelectric ceramic.

## Patentansprüche

1. Verfahren zur Steuerung einer Kopfaufhängung in einem Festplattenlaufwerk mit einem Expansions-/Kontraktionsmittel zur Steuerung der Höhe der Kopfaufhängung durch Expansion oder Kontraktion als Reaktion auf ein Steuersignal, wobei bei dem Verfahren ein Steuersignal an das Expansions-/Kontraktionsmittel angelegt wird, um den Kopf von der Platte zu entfernen, wenn die Umdrehungsgeschwindigkeit der Platte unter der Geschwindigkeit liegt, die erforderlich ist, um eine ausreichende Luftströmung zu erzeugen, um den Kopf über der Oberfläche der Platte fliegen zu lassen;
**dadurch gekennzeichnet, daß** das Festplattenlaufwerk weiterhin ein Rückkopplungsmittel zur Erzeugung eines Rückkopplungssignals umfaßt, das dem Ausmaß der Expansion oder Kontraktion des Expansions-/Kontraktionsmittels entspricht; und
bei dem Verfahren das Steuersignal in Abhängigkeit von dem Rückkopplungssignal angelegt wird, um die Entfernung des Kopfs von der Platte auf einem vorbestimmten Abstand zu halten.

2. Verfahren nach Anspruch 1, mit den folgenden Schritten:
Entfernen des Kopfs von der Platte durch Anlegen des besagten Steuersignals, wenn die Platte stillsteht;
Unterbrechen des besagten Steuersignals, wenn die Umdrehungsgeschwindigkeit der Platte die Geschwindigkeit erreicht, die erforderlich ist, um den Kopf über der Oberfläche der Platte fliegen zu lassen; und
Entfernen des Kopfs von der Platte durch Anlegen des besagten Steuersignals, wenn die besagte Plattengeschwindigkeit unter die Geschwindigkeit absinkt, die erforderlich ist, um den Kopf über der Oberfläche der Platte fliegen zu lassen.

3. Verfahren nach Anspruch 2, weiterhin mit dem anfänglichen Schritt des Parkens des Kopfs in einem Parkbereich der Platte, wenn die Platte stillsteht, und dem nachfolgenden Schritt des Parkens der Kopfaufhängung durch Anlegen eines Stoppsignals an das Betätigungsglied zum Zeitpunkt des Stoppens der Umdrehung der Platte oder davor.

4. Vorrichtung zur Steuerung einer Kopfaufhängung in einem Festplattenlaufwerk mit einer Steuerung, wobei die Vorrichtung folgendes umfaßt:
ein Mittel zur Erzeugung eines Zustandssignals gemäß einer durch die Steuerung gesteuerten aktuellen Plattenoperationsfunktion;
ein Expansions-/Kontraktionsmittel zur Steuerung der Höhe der Kopfaufhängung durch Expansion oder Kontraktion als Reaktion auf ein Steuersignal; und
ein Mittel zum Anlegen eines Steuersignals an das Expansions-/Kontraktionsmittel zur Entfernung des Kopfs von der Platte als Reaktion auf das Zustandssignal, wenn die Umdrehungsgeschwindigkeit der Platte unter der Geschwindigkeit liegt, die erforderlich ist, um eine ausreichende Luftströmung zu erzeugen, um den Kopf über der Oberfläche der Platte fliegen zu lassen;
**gekennzeichnet durch ein** Rückkopplungsmittel zur Erzeugung eines Rückkopplungssignals, das dem Ausmaß der Expansion oder Kontraktion des Expansions-/Kontraktionsmittels entspricht; und
ein Mittel zum Anlegen des Steuersignals in Abhängigkeit von dem Rückkopplungssignal, um die Entfernung des Kopfs von der Platte auf einem vorbestimmten Abstand zu halten.

5. Vorrichtung nach Anspruch 4 mit einem Verstärkungsmittel zur Verstärkung des Zustandssignals, wobei das Expansions-/Kontraktionsmittel auf ein Signal reagiert, das in dem besagten Verstärkungsmittel erzeugt wird.

6. Vorrichtung nach Anspruch 4 oder 5, bei der das Expansions-/Kontraktionsmittel ein piezoelektrisches Material umfaßt.

7. Vorrichtung nach Anspruch 6, bei der das piezoelektrische Material ein piezoelektrisches Keramikmaterial umfaßt.

8. Vorrichtung nach einem der Ansprüche 4-7, bei der das Mittel zur Erzeugung eines Rückkopplungssignals ein piezoelektrisches Keramikmaterial umfaßt.

## Revendications

1. Méthode de commande d'une suspension de tête d'une unité de disque dur comportant un moyen de dilatation/contraction destiné à commander la hauteur de la suspension de tête en se dilatant ou en se contractant en réponse à un signal de commande, la méthode comprenant l'application d'un signal de commande au moyen de dilatation/contraction pour séparer la tête du disque lorsque la vitesse de rotation du disque est inférieure à la vitesse requise pour générer un courant d'air suffisant pour la sustentation de la tête au-dessus de la surface du disque;
**caractérisée en ce que** l'unité de disque dur comprend en outre un moyen de rétroaction destiné à générer un signal de rétroaction correspondant au degré de dilatation ou de contraction du moyen de dilatation/contraction; et
la méthode comprend l'application du signal de commande en fonction du signal de rétroaction pour maintenir la séparation de la tête du disque à une distance prédéterminée.

2. Méthode selon la revendication 1, comprenant les étapes de:
séparation de la tête du disque par application dudit signal de commande lorsque le disque est stationnaire;
interruption dudit signal de commande lorsque la vitesse de rotation du disque atteint celle nécessaire à la sustentation de la tête au-dessus de la surface du disque; et
séparation de la tête du disque par application dudit signal de commande lorsque ladite vitesse du disque chute en dessous de la vitesse nécessaire à la sustentation de la tête au-dessus de la surface du disque.

3. Méthode selon la revendication 2 et comprenant en outre l'étape initiale de stationnement de la tête dans une zone de stationnement du disque lorsque le disque est stationnaire, et l'étape ultérieure de stationnement de la suspension de tête par appplication d'un signal d'arrêt à l'actionneur au moment où, ou avant que le disque arrête sa rotation.

4. Appareil de commande d'une suspension de tête dans une unité de disque dur comportant un dispositif de commande, l'appareil comprenant:
un moyen destiné à générer un signal d'état suivant une fonction de fonctionnement courante du disque commandée par le dispositif de commande;
un moyen de dilatation/contraction destiné à commander la hauteur de la suspension de tête en se dilatant ou en se contractant en réponse à un signal de commande, et
un moyen destiné à appliquer un signal de commande au moyen de dilatation/contraction pour séparer la tête du disque en réponse au signal d'état lorsque la vitesse de rotation du disque est inférieure à la vitesse requise pour générer un courant d'air suffisant pour la sustentation de la tête au-dessus de la surface du disque;
**caractérisé par** un moyen de rétroaction destiné à générer un signal de rétroaction correspondant au degré de dilatation ou de contraction du moyen de dilatation/contraction; et
un moyen destiné à appliquer le signal de commande en fonction du signal de rétroaction pour maintenir la séparation de la tête du disque à une distance prédéterminée.

5. Appareil selon la revendication 4, comportant un moyen amplificateur destiné à amplifier le signal d'état, le moyen de dilatation/contraction étant sensible à un signal généré dans ledit moyen amplificateur.

6. Appareil selon la revendication 4 ou la revendication 5, dans lequel le moyen de dilatation/contraction comprend un corps piézoélectrique.

7. Appareil selon la revendication 6, dans lequel le corps piézoélectrique comprend une céramique piézoélectrique.

8. Appareil selon l'une quelconque des revendications 4 à 7, dans lequel le moyen destiné à générer un signal de rétroaction comprend une céramique piézoélectrique.
